(19) Europäisches Patentamt / European Patent Office / Office européen des brevets

(11) **EP 3 450 866 A1**

(12) **EUROPEAN PATENT APPLICATION**
published in accordance with Art. 153(4) EPC

(43) Date of publication:
**06.03.2019 Bulletin 2019/10**

(51) Int Cl.:
**F24F 11/02** (2006.01)    **F25B 49/02** (2006.01)

(21) Application number: **16900488.4**

(22) Date of filing: **28.04.2016**

(86) International application number:
**PCT/JP2016/063434**

(87) International publication number:
**WO 2017/187618 (02.11.2017 Gazette 2017/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• **SUZUKI, Yasuhiro**
  **Tokyo 100-8310 (JP)**
• **TAKAGI, Masahiko**
  **Tokyo 100-8310 (JP)**
• **TANAKA, Kenyu**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **REFRIGERATION CYCLE APPARATUS**

(57)    Provided is a refrigeration cycle apparatus, including: a refrigerant circuit configured to circulate refrigerant having a flammability; an indoor unit including a casing configured to accommodate a load-side heat exchanger of the refrigerant circuit; and a controller configured to control the indoor unit, wherein the indoor unit includes a refrigerant detection unit and an air-sending fan, wherein the controller is configured to control the air-sending fan to operate at an airflow rate Q [m$^3$/h] when the refrigerant is detected, and wherein, when a lower flammability limit of the refrigerant is LFL [kg/m$^3$] and an assumed leaking speed of the refrigerant is W [kg/h], the airflow rate Q, the lower flammability limit LFL, and the assumed leaking speed W are set to satisfy a relationship of Q>W/LFL.

FIG. 5

START

ACQUIRE REFRIGERANT CONCENTRATION — S1

IS REFRIGERANT CONCENTRATION EQUAL TO OR HIGHER THAN THRESHOLD VALUE? — S2    NO

YES

OPERATE INDOOR AIR-SENDING FAN AT AIRFLOW RATE Q (Q>W/LFL) — S3

END

EP 3 450 866 A1

**Description**

Technical Field

The present invention relates to a refrigeration cycle apparatus, which includes a refrigerant detection unit.

Background Art

In Patent Literature 1, there is described an air-conditioning apparatus. The air-conditioning apparatus includes a refrigerant detection unit provided on an outer surface of an indoor unit and configured to detect refrigerant, and a controller configured to control an indoor air-sending fan to rotate when the refrigerant detection unit detects the refrigerant. The air-conditioning apparatus can detect leaked refrigerant by the refrigerant detection unit when the refrigerant leaks to an indoor space through an extension pipe connected to the indoor unit or when refrigerant leaked inside the indoor unit passes through a gap of a casing of the indoor unit to flow out from the indoor unit. Further, when the leakage of the refrigerant is detected by the refrigerant detection unit, the indoor air-sending fan is rotated. With this action, indoor air is sucked through an air inlet formed in the casing of the indoor unit, and air is blown off to the indoor space through an air outlet. In this manner, the leaked refrigerant can be diffused.

Citation List

Patent Literature

Patent Literature 1: Japanese Patent No. 4599699

Summary of Invention

Technical Problem

In Patent Literature 1, however, a rotational speed, specifically, an airflow rate of the indoor air-sending fan is not described. Therefore, in a case where the airflow rate which is required for diffusion of the leaked refrigerant cannot be obtained even when the indoor air-sending fan is rotated after the occurrence of leakage of the refrigerant, there is a problem that a flammable concentration region may be formed in an indoor space.
The present invention has been made to solve the problem described above, and has an object to provide a refrigeration cycle apparatus capable of inhibiting a flammable concentration region from being formed in an indoor space in case of leakage of refrigerant.

Solution to Problem

According to one embodiment of the present invention, there is provided a refrigeration cycle apparatus, including: a refrigerant circuit configured to circulate refrigerant having a flammability; an indoor unit including a casing configured to accommodate a load-side heat exchanger of the refrigerant circuit; and a controller configured to control the indoor unit, wherein the indoor unit includes a refrigerant detection unit and an air-sending fan, wherein the controller is configured to control the air-sending fan to operate at an airflow rate Q [m$^3$/h] when the refrigerant is detected, and wherein, when a lower flammability limit of the refrigerant is LFL [kg/m$^3$] and an assumed leaking speed of the refrigerant is W [kg/h], the airflow rate Q, the lower flammability limit LFL, and the assumed leaking speed W are set to satisfy a relationship of Q>W/LFL.

Advantageous Effects of Invention

According to one embodiment of the present invention, when the refrigerant leaks, the air-sending fan can be operated at a required airflow rate. Therefore, even when the refrigerant leaks, the flammable concentration region can be inhibited from being formed in the indoor space.

Brief Description of Drawings

[Fig. 1] Fig. 1 is a refrigerant circuit diagram illustrating a schematic configuration of an air-conditioning apparatus according to Embodiment 1 of the present invention.

[Fig. 2] Fig. 2 is a front view illustrating an outer appearance of an indoor unit 1 of the air-conditioning apparatus according to Embodiment 1 of the present invention.

[Fig. 3] Fig. 3 is a front view schematically illustrating an internal structure of the indoor unit 1 of the air-conditioning apparatus according to Embodiment 1 of the present invention.

[Fig. 4] Fig. 4 is a side view schematically illustrating the internal structure of the indoor unit 1 of the air-conditioning apparatus according to Embodiment 1 of the present invention.

[Fig. 5] Fig. 5 is a flowchart illustrating an example of refrigerant leakage detection processing executed by a controller 30 of the air-conditioning apparatus according to Embodiment 1 of the present invention.

Description of Embodiments

Embodiment 1

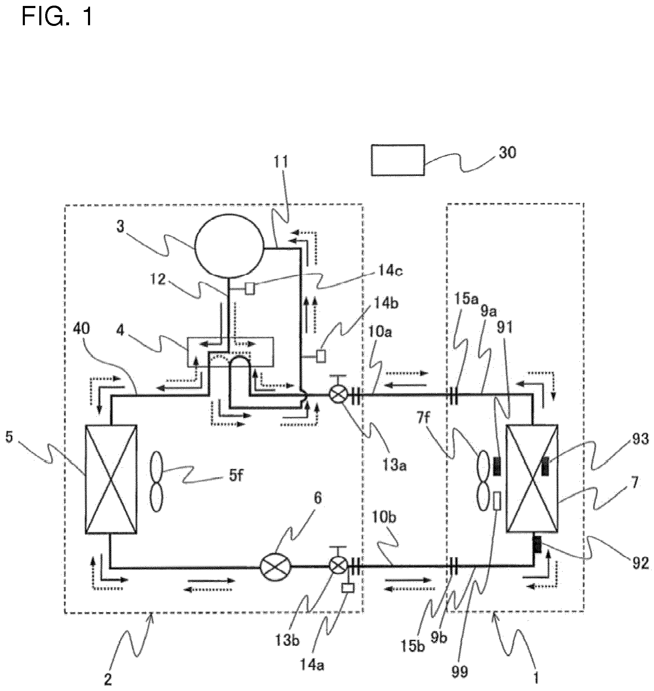

A refrigeration cycle apparatus according to Embodiment 1 of the present invention is described. In Embodiment 1, an air-conditioning apparatus of a separate type is exemplified as the refrigeration cycle apparatus. Fig. 1 is a refrigerant circuit diagram illustrating a schematic configuration of the air-conditioning apparatus according to Embodiment 1. In Fig. 1 and the subsequent drawings, for example, a dimensional relationship and a shape of components are different from actual ones.

As illustrated in Fig. 1, the air-conditioning apparatus includes a refrigerant circuit 40 configured to circulate refrigerant. The refrigerant circuit 40 includes a compressor 3, a refrigerant flow switching device 4, a heat source-side heat exchanger 5 (for example, outdoor heat exchanger), a pressure reducing device 6, and a load-side heat exchanger 7 (for example, indoor heat exchanger), which are annularly connected through refrigerant pipes in the stated order. Further, the air-conditioning apparatus includes, for example, an outdoor unit 2 which is installed outdoors as a heat source unit. Further, the air-conditioning apparatus includes, for example, an indoor unit 1 which is installed indoors as a load unit. The indoor unit 1 and the outdoor unit 2 are connected to each other through extension pipes 10a and 10b forming parts of the refrigerant pipes.

Examples of refrigerant used as the refrigerant to be circulated in the refrigerant circuit 40 include a slightly flammable refrigerant, for example, R32, R1234yf, or R1234ze(E), and a strongly flammable refrigerant, for example, R290 or R1270. Those refrigerants may be each used as a single-component refrigerant, or may be used as a mixed refrigerant obtained by mixing two or more kinds of the refrigerants with each other. In the following description, the refrigerant having a flammability equal to or higher than a slightly flammable level (for example, 2L or higher in category of ASHRAE34) is often referred to as "refrigerant having a flammability" or "flammable refrigerant". Further, as the refrigerant to be circulated in the refrigerant circuit 40, a nonflammable refrigerant, for example, R22 or R410A, having a non-flammability (for example, 1 in category of ASHRAE34) can be used. Those refrigerants have a density larger than that of air under an atmospheric pressure (for example, a temperature is a room temperature of 25 degrees Celsius).

The compressor 3 is a fluid machine configured to compress a sucked low-pressure refrigerant and to discharge the low-pressure refrigerant as high-pressure refrigerant. The refrigerant flow switching device 4 is configured to switch a flow direction of the refrigerant in the refrigerant circuit 40 between a cooling operation and a heating operation. As the refrigerant flow switching device 4, for example, a four-way valve or a plurality of two way valves is/are used. The heat source-side heat exchanger 5 is a heat exchanger configured to function as a radiator (for example, condenser) during the cooling operation and to function as an evaporator during the heating operation. The heat source-side heat exchanger 5 exchanges heat between the refrigerant flowing inside the heat source-side heat exchanger 5 and outdoor air sent by an outdoor air-sending fan 5f described later. The pressure reducing device 6 is configured to reduce the pressure of the high-pressure refrigerant such that the high-pressure refrigerant becomes the low-pressure refrigerant. As the pressure reducing device 6, for example, an electronic expansion valve having an opening degree which can be adjusted through control of a controller 30 described later is used. Further, as the pressure reducing device 6, a thermal expansion valve, a fixed valve, an expander, or other devices may be used. The load-side heat exchanger 7 is a heat exchanger configured to function as an evaporator during the cooling operation and to function as a radiator (for example, condenser) during the heating operation. The load-side heat exchanger 7 exchanges heat between the refrigerant flowing inside the load-side heat exchanger 7 and air sent by an indoor air-sending fan 7f described later. In this case, the cooling operation represents an operation of supplying low-temperature and low-pressure refrigerant to the load-side heat exchanger 7, and the heating operation represents an operation of supplying high-temperature and high-pressure refrigerant to the load-side heat exchanger 7.

The outdoor unit 2 accommodates the compressor 3, the refrigerant flow switching device 4, the heat source-side heat exchanger 5, and the pressure reducing device 6. Further, the outdoor unit 2 accommodates the outdoor air-sending fan 5f configured to supply outdoor air to the heat source-side heat exchanger 5. The outdoor air-sending fan 5f is installed so as to face the heat source-side heat exchanger 5. When the outdoor air-sending fan 5f is rotated, an airflow passing through the heat source-side heat exchanger 5 is generated. As the outdoor air-sending fan 5f, for example, a propeller fan is used. The outdoor air-sending fan 5f is arranged, for example, on downstream of the heat source-side heat exchanger 5 along the airflow generated by the outdoor air-sending fan 5f.

The refrigerant pipes arranged in the outdoor unit 2 include a refrigerant pipe configured to connect between an extension pipe connection valve 13a on a side at which the refrigerant becomes a gas phase during the cooling operation (hereinafter referred to as the "gas side") and the refrigerant flow switching device 4, a suction pipe 11 connected to a suction side of the compressor 3, a discharge pipe 12 connected to a discharge side of the compressor 3, a refrigerant pipe configured to connect between the refrigerant flow switching device 4 and the heat source-side heat exchanger 5, a refrigerant pipe configured to connect between the heat source-side heat exchanger 5 and the pressure reducing device 6, and a refrigerant pipe configured to connect between an extension pipe connection valve 13b on a side at which the refrigerant becomes a liquid phase during the cooling operation (hereinafter referred to as the "liquid side") and the pressure reducing device 6. The extension pipe connection valve 13a is formed of a two-way valve capable of switching between open and close, and has one end to which a joint portion (for example, flare joint) is mounted. Further, the extension pipe connection valve 13b is formed of a three-way valve capable of switching between open and close. The extension pipe connection valve 13b has one end on which a service port 14a is mounted, which is used at a time of vacuuming being a preliminary work of filling the refrigerant circuit 40 with refrigerant, and the other end to which a joint portion (for example, flare joint) is mounted.

During both the cooling operation and the heating operation, high-temperature and high-pressure gas refrigerant compressed by the compressor 3 flows through the discharge pipe 12. During both the cooling operation and the heating operation, low-temperature and low-pressure gas refrigerant or two-phase refrigerant subjected to an evaporation action flows through the suction pipe 11. The suction pipe 11 is connected to a low-pressure-side service port 14b with a flare joint, and the discharge pipe 12 is connected to a high-pressure-side service port 14c with a flare joint. The service ports 14b and 14c are used to connect a pressure gauge to measure the operating pressure at a time of installation of the air-conditioning apparatus or at a time of a trial run for a repair.

The load-side heat exchanger 7 is accommodated in the indoor unit 1. Further, the indoor air-sending fan 7f configured to supply air to the load-side heat exchanger 7 is installed in the indoor unit 1. When the indoor air-sending fan 7f is rotated, an airflow passing through the load-side heat exchanger 7 is generated. As the indoor air-sending fan 7f, a centrifugal fan (for example, sirocco fan or turbofan), a cross flow fan, a mixed flow fan, an axial-flow fan (for example, propeller fan), or other fans is used depending on a mode of the indoor unit 1. The indoor air-sending fan 7f of Embodiment 1 is arranged on upstream of the load-side heat exchanger 7 along the airflow generated by the indoor air-sending fan 7f, but may be arranged on downstream of the load-side heat exchanger 7.

In the indoor unit 1, as refrigerant pipes, a gas-side indoor pipe 9a and a liquid-side indoor pipe 9b are provided. In a connection portion of the indoor pipe 9a to the gas-side extension pipe 10a, a joint portion 15a (for example, flare joint) for connection to the extension pipe 10a is provided. In a connection portion of the indoor pipe 9b to the liquid-side extension pipe 10b, a joint portion 15b (for example, flare joint) for connection to the extension pipe 10b is provided.

Further, the indoor unit 1 includes, for example, a suction air temperature sensor 91 configured to detect a temperature of indoor air sucked from the indoor space, a heat exchanger entrance temperature sensor 92 configured to detect a refrigerant temperature at an entrance portion of the load-side heat exchanger 7 during the cooling operation (exit portion during the heating operation), and a heat exchanger temperature sensor 93 configured to detect a refrigerant temperature (evaporating temperature or condensing temperature) of a two-phase portion of the load-side heat exchanger 7. In addition, the indoor unit 1 includes a refrigerant detection unit 99 described later. Those sensors are configured to output a detection signal to the controller 30 configured to control the indoor unit 1 or an entirety of the air-conditioning apparatus.

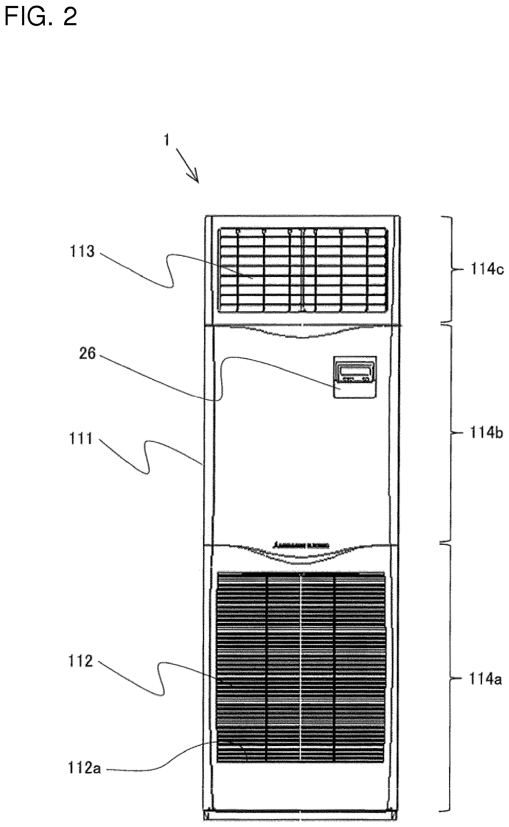

The controller 30 includes a microcomputer including a CPU, a ROM, a RAM, an I/O port, and a timer. The controller 30 can perform data communications with an operation unit 26 (see Fig. 2). The operation unit 26 is configured to receive an operation performed by a user and output an operation signal based on the operation to the controller 30. The controller 30 of Embodiment 1 is configured to control the operation of the indoor unit 1 or the entirety of the air-conditioning apparatus including an operation of the indoor air-sending fan 7f based on an operation signal received from the operation unit 26, the detection signal received from the sensors, or other signals. The controller 30 may be provided inside a casing of the indoor unit 1, or may be provided inside a casing of the outdoor unit 2. Further, the controller 30 may include an outdoor unit controller that is provided to the outdoor unit 2 and an indoor unit controller that is provided to the indoor unit 1 and capable of performing data communications with the outdoor unit controller.

Next, description is made of the operation of the refrigerant circuit 40 of the air-conditioning apparatus. First, the operation during the cooling operation is described. In Fig. 1, the solid arrows indicate flow directions of the refrigerant during the cooling operation. The refrigerant circuit 40 is configured so that, during the cooling operation, a refrigerant flow passage is switched by the refrigerant flow switching device 4 as indicated by the solid line, and the low-temperature and low-pressure refrigerant flows into the load-side heat exchanger 7.

The high-temperature and high-pressure gas refrigerant discharged from the compressor 3 flows into the heat source-side heat exchanger 5 after passing through the refrigerant flow switching device 4. During the cooling operation, the heat source-side heat exchanger 5 functions as a condenser. That is, the heat source-side heat exchanger 5 exchanges heat between the refrigerant flowing inside the heat source-side heat exchanger 5 and the outdoor air sent by the outdoor air-sending fan 5f, and heat of condensation of the refrigerant is transferred to the outdoor air. With this operation, the refrigerant that has flowed into the heat source-side heat exchanger 5 is condensed to become high-pressure liquid refrigerant. The high-pressure liquid refrigerant that has flowed out from the heat source-side heat exchanger 5 flows into the pressure reducing device 6, and is reduced in pressure to become low-pressure two-phase refrigerant. The low-pressure two-phase refrigerant that has flowed out from the pressure reducing device 6 passes through the extension pipe 10b, and flows into the load-side heat exchanger 7 of the indoor unit 1. During the cooling operation, the load-side heat exchanger 7 functions as an evaporator. That is, the load-side heat exchanger 7 exchanges heat between the refrigerant flowing inside the load-side heat exchanger 7 and the indoor air sent by the indoor air-sending fan 7f, and heat of evaporation of the refrigerant is received from the indoor air. With this operation, the refrigerant that has flowed into the load-side heat exchanger 7 evaporates to become low-pressure gas refrigerant or two-phase refrigerant having high quality. Further, the air sent by the indoor air-sending fan 7f is cooled by the refrigerant that receives heat. The low-pressure gas refrigerant or two-phase refrigerant having high quality, which has been evaporated by the load-side heat exchanger 7, passes through the extension pipe 10a and the refrigerant flow switching device 4, and is sucked by the compressor 3. The refrigerant sucked by the compressor 3 is compressed to become the high-temperature and high-pressure gas refrigerant. During the cooling operation, the above-mentioned cycle is continuously repeated.

Next, the operation during the heating operation is described. In Fig. 1, the dotted arrows indicate flow directions of the refrigerant during the heating operation. The refrigerant circuit 40 is configured so that, during the heating operation, the refrigerant flow passage is switched by the refrigerant flow switching device 4 as indicated by the dotted line, and the high-temperature and high-pressure refrigerant flows into the load-side heat exchanger 7.

The high-temperature and high-pressure gas refrigerant discharged from the compressor 3 flows into the load-side heat exchanger 7 of the indoor unit 1 via the refrigerant flow switching device 4 and the extension pipe 10a. During the heating operation, the load-side heat exchanger 7 functions as a condenser. That is, in the load-side heat exchanger 7, heat is exchanged between the refrigerant flowing inside the load-side heat exchanger 7 and the indoor air sent by the indoor air-sending fan 7f, and the heat of condensation of the refrigerant is transferred to the indoor air. With this operation, the refrigerant that has flowed into the load-side heat exchanger 7 is condensed to become high-pressure liquid refrigerant. Further, the indoor air sent by the indoor air-sending fan 7f is heated by a heat transferring action of the refrigerant. The high-pressure liquid refrigerant that has flowed out from the load-side heat exchanger 7 flows into the pressure reducing device 6 of the outdoor unit 2 via the extension pipe 10b to be reduced in pressure to become low-pressure two-phase refrigerant. The low-pressure two-phase refrigerant that has flowed out from the pressure reducing device 6 flows into the heat source-side heat exchanger 5. During the heating operation, the heat source-side heat exchanger 5 functions as the evaporator. Specifically, the heat source-side heat exchanger 5 exchanges heat between the refrigerant flowing inside the heat source-side heat exchanger 5 and the outdoor air sent by the outdoor air-sending fan 5f, and heat of evaporation of the refrigerant is received from the outdoor air. In this manner, the refrigerant that has flowed into the heat source-side heat exchanger 5 evaporates to become low-pressure gas refrigerant or two-phase refrigerant having high quality. The low-pressure gas refrigerant or the two-phase refrigerant having high quality, which has flowed out from the heat source-side heat exchanger 5, is sucked into the compressor 3 via the refrigerant flow switching device 4. The refrigerant sucked into the compressor 3 is compressed to become high-temperature and high-pressure gas refrigerant. During the heating operation, the above-mentioned cycle is continuously repeated.

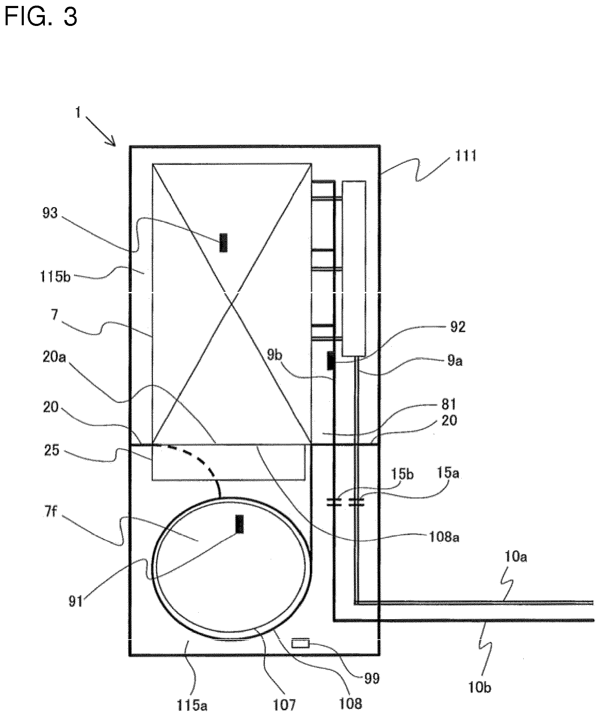

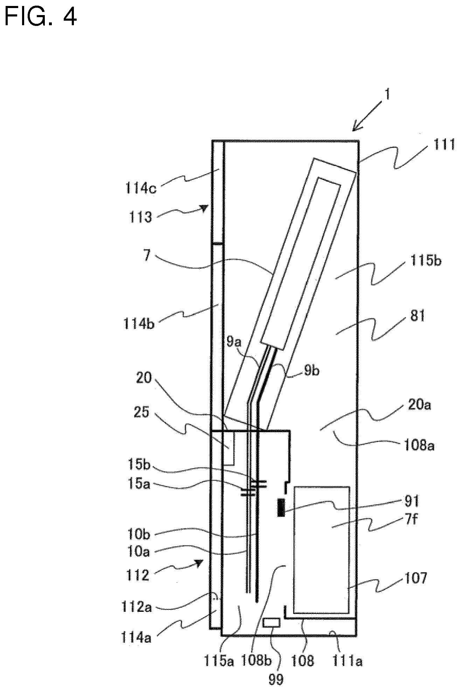

Fig. 2 is a front view illustrating a configuration of an exterior of the indoor unit 1 of the air-conditioning apparatus according to Embodiment 1. Fig. 3 is a front view schematically illustrating an internal structure of the indoor unit 1. Fig. 4 is a side view schematically illustrating the internal structure of the indoor unit 1. The left side of Fig. 4 indicates a front surface side (indoor space side) of the indoor unit 1. In Embodiment 1, as the indoor unit 1, the indoor unit 1 of a floor type, which is installed on a floor surface of an indoor space being an air-conditioned space, is described as an example. In the following description, positional relationships (for example, top-bottom relationship) of components are, in principle, exhibited when the indoor unit 1 is installed in a usable state.

As illustrated in Fig. 2 to Fig. 4, the indoor unit 1 includes a casing 111 having a vertically elongated cuboid shape. An air inlet 112 configured to suck air inside the indoor space is formed in a lower portion of a front surface of the casing 111. The air inlet 112 of Embodiment 1 is provided below a center portion along a vertical direction of the casing 111 and at a position closer to the floor surface. An air outlet 113 configured to blow off the air sucked from the air inlet 112 indoors is formed in the upper portion of the front surface of the casing 111, that is, at a position higher than the air inlet 112 (for example, above the center portion of the casing 111 along the vertical direction). Inside the casing 111, an air passage 81 is formed between the air inlet 112 and the air outlet 113.

The operation unit 26 is provided to the front surface of the casing 111 above the air inlet 112 and below the air outlet 113. The operation unit 26 is connected to the controller 30 through a communication line, and is capable of performing data communications with the controller 30. In the operation unit 26, an operation start operation, an operation end operation, a switching operation of an operation mode, a setting operation of a set temperature and a set airflow rate, and other operations for the air-conditioning apparatus are performed by a user. The operation unit 26 includes a display unit or an audio output unit as an informing unit configured to inform a user of various information.

The casing 111 is a hollow box body, and a front opening part is formed in a front surface of the casing 111. The casing 111 includes a first front panel 114a, a second front panel 114b, and a third front panel 114c, which are removably mounted to the front opening part. The first front panel 114a, the second front panel 114b, and the third front panel 114c all have a substantially rectangular flat outer shape. The first front panel 114a is removably mounted to a lower part of the front opening part of the casing 111. In the first front panel 114a, the air inlet 112 described above is formed. The second front panel 114b is arranged directly above the first front panel 114a, and is removably mounted to a center part of the front opening part of the casing 111 along the vertical direction. In the second front panel 114b, the operation unit 26 described above is provided. The third front panel 114c is arranged directly above the second front panel 114b, and is removably mounted to an upper part of the front opening part of the casing 111. In the third front panel 114c, the air outlet 113 described above is formed.

An internal space of the casing 111 is divided roughly into a lower space 115a being an air-sending part and an upper space 115b being a heat-exchanging part located above the lower space 115a. The lower space 115a and the upper space 115b are partitioned by a partition portion 20. The partition portion 20 has, for example, a flat shape, and is arranged approximately horizontally. In the partition portion 20, at least an air passage opening part 20a is formed to serve as an air passage between the lower space 115a and the upper space 115b. The lower space 115a is configured to be exposed to the front surface side when the first front panel 114a is removed from the casing 111. The upper space 115b is configured to be exposed to the front surface side when the second front panel 114b and the third front panel 114c are removed from the casing 111. That is, the partition portion 20 is mounted at approximately the same height as that of an upper edge of the first front panel 114a or a lower edge of the second front panel 114b. In this case, the partition portion 20 may be formed integrally with a fan casing 108 described later, may be formed integrally with a drain pan described later, or may be formed separately from the fan casing 108 or the drain pan.

In the air passage 81 within the lower space 115a, there is arranged the indoor air-sending fan 7f which is configured to cause a flow of air from the air inlet 112 to the air outlet 113 in the air passage 81. The indoor air-sending fan 7f of Embodiment 1 is a sirocco fan including a motor (not shown) and an impeller 107. The impeller 107 is connected to an output shaft of the motor, and has a plurality of blades arranged, for example, at regular intervals along a circumferential direction. A rotary shaft of the impeller 107 is arranged substantially in parallel with a front-and-back direction of the casing 111. A rotational speed of the indoor air-sending fan 7f is set variable at multiple levels (for example, at two or more levels) or variable in a continuous fashion by control of the controller 30. Specifically, an airflow rate of the indoor air-sending fan 7f is set variable at multiple levels (for example, at two or more levels) or variable in a continuous fashion by control of the controller 30.

The impeller 107 of the indoor air-sending fan 7f is covered with the fan casing 108 having a spiral shape. The fan casing 108 is formed, for example, separately from the casing 111. A suction opening part 108b for sucking the indoor air through the air inlet 112 into the fan casing 108 is formed near the center of a spiral of the fan casing 108. The suction opening part 108b is located so as to face the air inlet 112. Further, an air outlet opening part 108a for blowing off the sent air is formed along a direction of a tangential line of the spiral of the fan casing 108. The air outlet opening part 108a is arranged so as to be oriented upward, and is connected to the upper space 115b through the air passage opening part 20a of the partition portion 20. In other words, the air outlet opening part 108a communicates with the upper space 115b through the air passage opening part 20a. An opening end of the air outlet opening part 108a and an opening end of the air passage opening part 20a may be directly connected to each other, or may be indirectly connected to each other through a duct member or other parts.

Further, in the lower space 115a, there is provided an electrical component box 25 accommodating, for example, a microcomputer that forms the controller 30, various electrical components, and a board.

The load-side heat exchanger 7 is arranged in the air passage 81 within the upper space 115b. The indoor pipes 9a and 9b are connected to the load-side heat exchanger 7. The indoor pipes 9a and 9b pass through the partition portion 20 to extend from the upper space 115b into the lower space 115a and are respectively connected to the extension pipes 10a and 10b through intermediation of the joint portions 15a and 15b in the lower space 115a. The joint portions 15a and 15b are arranged in the air passage 81, or a space inside the casing 111 which communicates with the air passage 81. The drain pan (not shown) configured to receive condensed water that is condensed on a surface of the load-side heat exchanger 7 is provided below the load-side heat exchanger 7. The drain pan may be formed as a part of the partition portion 20, or may be formed separately from the partition portion 20 and arranged on the partition portion 20.

The refrigerant detection unit 99 configured to detect the leakage of the refrigerant is provided in the air passage 81, or the space inside the casing 111 which communicates with the air passage 81. As the refrigerant detection unit 99, a gas sensor such as a semiconductor gas sensor or a hot-wire type semiconductor gas sensor is used. The refrigerant detection unit 99 is configured to detect, for example, a refrigerant concentration in the air around the refrigerant detection unit 99, and to output the detection signal to the controller 30. The controller 30 determines presence or absence of leakage of the refrigerant based on the detection signal received from the refrigerant detection unit 99. Further, as the refrigerant detection unit 99, an oxygen concentration meter may be used, or a temperature sensor (for example, a thermistor) may be used. When the temperature sensor is used as the refrigerant detection unit 99, the refrigerant detection unit 99 detects the leakage of the refrigerant by detecting a reduction in temperature due to adiabatic expansion of the leaked refrigerant.

The refrigerant used in Embodiment 1 has a larger density than air under the atmospheric pressure. Therefore, it is desired that the refrigerant detection unit 99 be provided in a lower part inside the casing 111 (for example, a lowermost part inside the casing 111). In this example, the refrigerant detection unit 99 is provided in a lower part of the lower space 115a to fall within a height range from a height which is equal to or lower than a height of an opening lower end 112a of the air inlet 112 to a height which is equal to or higher than a height of a bottom surface portion 111a of the casing 111 (see Fig. 4). In this case, the opening lower end 112a of the air inlet 112 is positioned above the bottom surface portion 111a of the casing 111. In a bottom portion of the lower space 115a, which falls within the above-mentioned height range, a recessed portion having a small volume with an upwardly oriented opening is formed. When the refrigerant having a larger density than air under the atmospheric pressure is used, only small part of the refrigerant leaked inside the casing 111 stagnates in the recessed portion without flowing out from the casing 111. Therefore, through the arrangement of the refrigerant detection unit 99 in the recessed portion, the leakage of the refrigerant can be more reliably detected. The amount of refrigerant stagnating in the recessed portion is very small, and, at the same time, no ignition source such as an electrical component is provided in the recessed portion. Therefore, there is no fear of unexpected ignition.

As described above, the load-side heat exchanger 7, the indoor air-sending fan 7f, and the refrigerant detection unit 99 are all arranged in the air passage 81, or the space inside the casing 111 which communicates with the air passage 81. Further, the refrigerant detection unit 99 is arranged below the load-side heat exchanger 7.

Further, in Embodiment 1, the joint portions 15a and 15b are also arranged in the air passage 81, or the space inside the casing 111 which communicates with the air passage 81. The refrigerant detection unit 99 is arranged below the joint portions 15a and 15b.

In the indoor unit 1, leakage of refrigerant is liable to occur in the load-side heat exchanger 7 (in particular, at a brazed portion of the load-side heat exchanger 7) and at the joint portions 15a and 15b. Further, the refrigerant used in Embodiment 1 has a density larger than that of the air under the atmospheric pressure. Hence, the refrigerant detection unit 99 of Embodiment 1 is provided in the space inside the casing 111, which communicates with the space in which the load-side heat exchanger 7 and the joint portions 15a and 15b are provided and arranged at a position lower in height than the load-side heat exchanger 7 and the joint portions 15a and 15b. With this arrangement, the refrigerant detection unit 99 can reliably detect the leaked refrigerant when the refrigerant leaks at least while the indoor air-sending fan 7f is in a stopped state. In Embodiment 1, the refrigerant detection unit 99 is provided at the position in the lower part of the lower space 115a, but the refrigerant detection unit 99 may be arranged at another position.

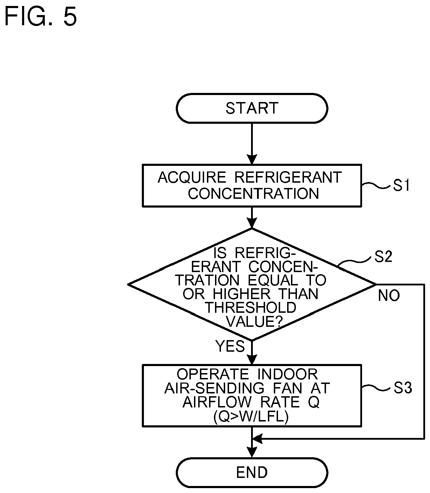

Fig. 5 is a flowchart illustrating an example of the flow of the refrigerant leakage detection processing executed by the controller 30 of the air-conditioning apparatus according to Embodiment 1. The refrigerant leakage detection processing is executed repeatedly at predetermined time intervals at all times including while the air-conditioning apparatus is operating and is stopped, or only while the air-conditioning apparatus is stopped.

In Step S1 of Fig. 5, the controller 30 acquires information on the refrigerant concentration around the refrigerant detection unit 99 based on the detection signal received from the refrigerant detection unit 99.

Next, in Step S2, the controller 30 determines whether or not the refrigerant concentration around the refrigerant detection unit 99 is equal to or larger than a threshold value set in advance. When the controller 30 determines that the refrigerant concentration is equal to or larger than the threshold value, the processing proceeds to Step S3. When the controller 30 determines that the refrigerant concentration is smaller than the threshold value, the processing is terminated.

In Step S3, the controller 30 starts the operation of the indoor air-sending fan 7f. The airflow rate of the indoor air-sending fan 7f is set to a predetermined airflow rate Q. A settable range of the airflow rate Q is described later. Information of the airflow rate Q or information of the rotational speed of the indoor air-sending fan 7f for obtaining the airflow rate Q is stored in advance in the ROM of the controller 30. When the indoor air-sending fan 7f is already operated at an airflow rate equal to or larger than the airflow rate Q, the operation is continued without any change. When the indoor air-sending fan 7f is operated at an airflow rate smaller than the airflow rate Q, the airflow rate of the indoor air-sending fan 7f is increased to the airflow rate Q. When the indoor air-sending fan 7f is stopped, the indoor air-sending fan 7f is activated to operate the indoor air-sending fan 7f at the rotational speed which enables the airflow rate Q to be obtained. In Step S3, the display unit, the audio output unit, or other units provided in the operation unit 26 may be used to inform a user that the leakage of the refrigerant has occurred. Further, the indoor air-sending fan 7f that has started to operate in Step S3 may be stopped after elapse of a predetermined time period set in advance.

As described above, in the refrigerant leakage detection processing, when the leakage of the refrigerant is detected (that is, when the refrigerant concentration detected by the refrigerant detection unit 99 is equal to or larger than the threshold value), the operation of the indoor air-sending fan 7f is forcibly started. With this operation, it is possible to diffuse the leaked refrigerant.

As described above, in Embodiment 1, examples of the refrigerant to be circulated in the refrigerant circuit 40 include flammable refrigerants such as R32, R1234yf, R1234ze(E), R290, and R1270. Therefore, in case of leakage of refrigerant in the indoor unit 1, there is a fear that the indoor refrigerant concentration is increased to form a flammable concentration region (for example, region in which the refrigerant concentration is equal to or larger than the lower flammability limit (LFL)).

Those flammable refrigerants have a density larger than that of air under the atmospheric pressure. Therefore, when the leakage of the refrigerant occurs at a position at which the height from the floor surface of the indoor space is relatively large, the leaked refrigerant is diffused during descending. Thus, the refrigerant concentration becomes uniform in the indoor space, and hence the refrigerant concentration is less liable to be increased. In contrast, when the leakage of the refrigerant occurs at a position at which the height from the floor surface of the indoor space is small, the leaked refrigerant remains at a low position near the floor surface, and hence the refrigerant concentration tends to be locally increased. As a result, when the leakage of the flammable refrigerant occurs in the indoor unit 1 of, in particular, a floor type, the risk of formation of the flammable concentration region is relatively increased as compared to a case in which the leakage of the flammable refrigerant occurs in an indoor unit of a type other than the floor type.

While the air-conditioning apparatus is operated, air is blown off to the indoor space due to the operation of the indoor air-sending fan 7f of the indoor unit 1. Therefore, even when the flammable refrigerant leaks to the indoor space, the leaked flammable refrigerant is diffused in the indoor space by the air being blown off. In this manner, the flammable concentration region can be inhibited from being formed in the indoor space. However, while the air-conditioning apparatus is stopped, the indoor air-sending fan 7f of the indoor unit 1 is also stopped, and hence the leaked refrigerant cannot be diffused by the air being blown off. Therefore, detection of the leaked refrigerant is more required while the air-conditioning apparatus is stopped. In Embodiment 1, the operation of the indoor air-sending fan 7f is started when the leakage of the refrigerant is detected, and hence the flammable concentration region can be inhibited from being formed in the indoor space even when the flammable refrigerant leaks to the indoor space while the air-conditioning apparatus is stopped.

In Embodiment 1, the portions having the risk of occurrence of leakage of the refrigerant are all arranged in the air passage 81, or the space inside the casing 111 which communicates with the air passage 81. Further, the refrigerant detection unit 99 is arranged in the air passage 81, or the space that is inside the casing 111 and communicates with the air passage 81 and, at the same time, is arranged below the portion having the risk of occurrence of the leakage of the refrigerant. Therefore, when the leakage of the refrigerant occurs, the leaked refrigerant can be reliably detected by the refrigerant detection unit 99 before the leaked refrigerant flows out from the casing 111 of the indoor unit 1. Further, when the leakage of the refrigerant occurs, the operation of the indoor air-sending fan 7f can be started before the leaked refrigerant flows out from the casing 111 of the indoor unit 1.

When the operation of the indoor air-sending fan 7f is started, the leaked refrigerant is mixed with the air sucked into the air passage 81 from the air inlet 112 and is then blown off as refrigerant mixed air into the indoor space from the air outlet 113. The refrigerant contained in the blown-off refrigerant mixed air is gradually diffused in the indoor space. Specifically, in the indoor space outside the casing 111, the refrigerant concentration becomes the highest in the refrigerant mixed air blown off from the air outlet 113. Therefore, when the refrigerant concentration in the refrigerant mixed air that is blown off from the air outlet 113 is smaller than a lower flammability limit LFL, the flammable concentration region is not formed in the indoor space in which the indoor unit 1 is installed. This is because the refrigerant concentration is not increased without application of an external force.

Therefore, in Embodiment 1, the airflow rate Q [m$^3$/h] of the indoor air-sending fan 7f given when the leakage of the refrigerant is detected to forcibly operate the indoor air-sending fan 7f is set to satisfy a relationship expressed by Expression (1) below. In Expression (1), the lower flammability limit of the refrigerant is LFL [kg/m$^3$], and an assumed leaking speed of the refrigerant is W [kg/h]. An upper limit of the airflow rate Q corresponds to a maximum airflow rate of the indoor air-sending fan 7f.

$$Q > W/LFL \qquad \cdots (1)$$

The assumed leaking speed W represents a mass of the refrigerant (at the concentration of 100%) leaked into the air passage 81 per unit time. The airflow rate Q represents a volume of air moving inside the air passage 81 per unit time, specifically, a volume of air sucked from the air inlet 112 or a volume of air blown off from the air outlet 113. Specifically, the refrigerant concentration in the refrigerant mixed air moving inside the air passage 81 is a value W/Q obtained by dividing the assumed leaking speed W by the airflow rate Q. When the value W/Q is smaller than the lower flammability limit (W/Q<LFL), the refrigerant concentration in the refrigerant mixed air blown off from the air outlet 113 becomes smaller than the lower flammability limit LFL. Therefore, through setting of the airflow rate Q to satisfy Expression (1), the refrigerant concentration in the refrigerant mixed air blown off from the air outlet 113 can be set smaller than the lower flammability limit LFL. In this manner, even when the leakage of the refrigerant occurs, the flammable concentration region can be inhibited from being formed in the indoor space.

A specific example of the range of the airflow rate Q is described, taking the use of R32 as the refrigerant as an example. The lower flammability limit LFL of R32 is 0.306 kg/m³.

The assumed leaking speed W is now examined. In the literature "Overview of the risk assessment and the safety guideline for VRF system using A2L refrigerants", The international Symposium on New Refrigerants and Environmental Technology 2014, November 2014, The Japan Refrigeration and Air Conditioning Industry Association, pages 234 to 240, it is described that, according to ISO 5149-1 Annex A.5, 10 kg/h is adopted as the refrigerant leaking speed in the indoor unit on the condition that there is no source of vibration such as a compressor. Further, in the literature mentioned above, there is described that, as results of measurements of the refrigerant leaking speed on twenty two leakage components for the indoor unit, which had been recalled from the market, three leakage components had a relatively high leaking speed of from about 1 kg/h to 10 kg/h and the remaining eighteen leakage components had a small leaking speed ranging from about 0.005 kg/h to about 0.5 k/h. According to the descriptions given above, based on any of ISO and the results of actual measurements, it is understood that 10 kg/h can be used as the assumed leaking speed W for the indoor unit without the compressor.

Therefore, when R32 is used as the refrigerant, the lower flammability limit LFL is 0.306 kg/m³ and the assumed leaking speed W is 10 kg/h. Hence, when the airflow rate Q is set to satisfy Expression (2), the flammable concentration region can be inhibited from being formed in the indoor space.

$$Q>10 \text{ [kg/h]}/0.306 \text{ [kg/m}^3\text{]}=32.7 \text{ [m}^3\text{/h]}=0.545 \text{ [m}^3\text{/min]} \quad \cdots(2)$$

Even when a refrigerant other than R32 is used, the airflow rate Q can be obtained in the same manner as described above by using the lower flammability limit of the refrigerant.

When R1234yf (lower flammability limit: 0.289 kg/m³) is used as the refrigerant, the flammable concentration region can be inhibited from being formed in the indoor space by setting the airflow rate Q to satisfy Expression (3).

$$Q>10 \text{ [kg/h]}/0.289 \text{ [kg/m}^3\text{]}=34.6 \text{ [m}^3\text{/h]}=0.577 \text{ [m}^3\text{/min]} \quad \cdots(3)$$

When R290 (lower flammability limit: 0.038 kg/m³) is used as the refrigerant, the flammable concentration region can be inhibited from being formed in the indoor space by setting the airflow rate Q to satisfy Expression (4).

$$Q>10 \text{ [kg/h]}/0.038 \text{ [kg/m}^3\text{]}=263 \text{ [m}^3\text{/h]}=4.39 \text{ [m}^3\text{/min]} \quad \cdots(4)$$

When R1270 (lower flammability limit: 0.043 kg/m³) is used as the refrigerant, the flammable concentration region can be inhibited from being formed in the indoor space by setting the airflow rate Q to satisfy Expression (5).

$$Q>10 \text{ [kg/h]}/0.043 \text{ [kg/m}^3\text{]}=233 \text{ [m}^3\text{/h]}=3.88 \text{ [m}^3\text{/min]} \quad (5)$$

Even when a refrigerant other than those described above is used, the airflow rate Q can be obtained in the same manner.

As described above, the refrigeration cycle apparatus according to Embodiment 1 includes the refrigerant circuit 40 configured to circulate the refrigerant having a flammability, the indoor unit 1 including the casing 111 configured to accommodate the load-side heat exchanger 7 of the refrigerant circuit 40, and the controller 30 configured to control the indoor unit 1. The indoor unit 1 includes the refrigerant detection unit 99 and the indoor air-sending fan 7f which are accommodated in the casing 111. The controller 30 is configured to control the indoor air-sending fan 7f to operate at the airflow rate Q [m³/h] when the refrigerant is detected. When the lower flammability limit of the refrigerant is LFL [kg/m³] and the assumed leaking speed of the refrigerant is W [kg/h], the airflow rate Q, the lower flammability limit LFL, and the assumed leaking speed W are set to satisfy the relationship of Q>W/LFL.

According to the configuration described above, when the refrigerant leaks, the indoor air-sending fan 7f can be operated at the airflow rate which is required for diffusion of the leaked refrigerant. Therefore, in case of leakage of the refrigerant, the flammable concentration region can be inhibited from being formed in the indoor space.

Further, in the refrigeration cycle apparatus according to Embodiment 1, the casing 111 may have the air inlet 112, the air outlet 113, and the air passage 81 formed between the air inlet 112 and the air outlet 113. The load-side heat exchanger 7, the refrigerant detection unit 99, and the indoor air-sending fan 7f may be arranged in the air passage 81, or in the space inside the casing 111 which communicates with the air passage 81. According to the configuration described above, when the leakage of the refrigerant occurs in the load-side heat exchanger 7, the leakage of the refrigerant can be reliably detected by the refrigerant detection unit 99.

Further, the refrigeration cycle apparatus according to Embodiment 1 may further include the outdoor unit 2 (an example of the heat source unit) configured to accommodate the heat source-side heat exchanger 5 of the refrigerant circuit 40 and the extension pipes 10a and 10b which connect the indoor unit 1 and the outdoor unit 2 each other. The extension pipes 10a and 10b and the load-side heat exchanger 7 may be connected through intermediation of the joint portions 15a and 15b, respectively, and the joint portions 15a and 15b may be arranged in the air passage 81, or the space inside the casing 111 which communicates with the air passage 81. According to the configuration described above, when the leakage of the refrigerant occurs at the joint portions 15a and 15b, the leakage of the refrigerant can be reliably detected by the refrigerant detection unit 99.

Further, in the refrigeration cycle apparatus according to Embodiment 1, the refrigerant detection unit 99 may be arranged below the load-side heat exchanger 7 or the joint portions 15a and 15b. According to the configuration described above, the leakage of the refrigerant can be more reliably detected by the refrigerant detection unit 99.

Further, in the refrigeration cycle apparatus according to Embodiment 1, R32 may be used as the refrigerant, and the airflow rate Q may satisfy the relationship of Q>32.7 [$m^3$/h]. According to the configuration described above, when R32 is used as the refrigerant, the flammable concentration region can be inhibited from being formed in the indoor space.

Further, in the refrigeration cycle apparatus according to Embodiment 1, the indoor unit 1 may be of a floor type. According to the configuration described above, even in the indoor unit of a floor type in which the position at which the refrigerant leaks is liable to be low in height from the floor surface, the flammable concentration region can be inhibited from being formed in the indoor space.

Further, the airflow rate setting method according to Embodiment 1 is a method of setting the airflow rate Q in the refrigeration cycle apparatus including the refrigerant circuit 40 configured to circulate the refrigerant having a flammability, the indoor unit 1 including the casing 111 configured to accommodate the load-side heat exchanger 7 of the refrigerant circuit 40, and the controller 30 configured to control the indoor unit 1. The indoor unit 1 includes the refrigerant detection unit 99 and the indoor air-sending fan 7f which are accommodated in the casing 111. The controller 30 is configured to control the indoor air-sending fan 7f to operate at the airflow rate Q [$m^3$/h] when the refrigerant is detected. When the lower flammability limit of the refrigerant is LFL [$kg/m^3$] and the assumed leaking speed of the refrigerant is W [kg/h], the airflow rate Q is set so that the airflow rate Q, the lower flammability limit LFL, and the assumed leaking speed W to satisfy the relationship of Q>W/LFL.

According to the configuration described above, when the refrigerant leaks, the indoor air-sending fan 7f can be operated at the airflow rate which is required for diffusion of the leaked refrigerant. Therefore, even when the refrigerant leaks, the flammable concentration region can be inhibited from being formed in the indoor space.

Other Embodiments

The present invention is not limited to the embodiment above, and various modifications may be made thereto.

For example, in the embodiment above, description is made of the indoor unit of a floor type as an example. However, the present invention can be applied to other indoor units of, for example, a ceiling-mounted cassette type, a ceiling-concealed type, a ceiling-suspended type, and a wall-hung type.

Further, in the embodiment above, description is made of the indoor unit which includes the load-side heat exchanger arranged in the upper part inside the casing and the indoor air-sending fan arranged in the lower part inside the casing as an example. However, the present invention is not limited thereto. The indoor unit may include the load-side heat exchanger arranged in the lower part inside the casing and the indoor air-sending fan arranged in the upper part inside the casing, or the indoor unit may include the load-side heat exchanger and the indoor air-sending fan which are arranged side by side in a horizontal direction of the indoor unit.

Further, in the embodiment above, description was made of the refrigeration cycle apparatus as an example of the air-conditioning apparatus. However, the present invention can also be applied to other refrigeration cycle apparatuses such as a heat pump water heater (for example, heat pump water heater described in Japanese Patent Application Laid-open No. 2016-3783), a chiller and a showcase, or a refrigeration cycle system.

Reference Signs List

1 indoor unit 2 outdoor unit 3 compressor 4 refrigerant flow switching device 5 heat source-side heat exchanger 5f outdoor air-sending fan 6 pressure reducing device 7 load-side heat exchanger 7f indoor air-sending fan 9a, 9b indoor pipe 10a, 10b extension pipe 11 suction pipe 12 discharge pipe 13a, 13b extension pipe connecting valve 14a, 14b, 14c service port 15a, 15b joint portion 20 partition portion 20a air passage opening part 25 electrical component box 26 operation unit 30 controller 40 refrigerant circuit 81 air passage 91 suction air temperature sensor 92 heat exchanger entrance temperature sensor 93 heat exchanger temperature sensor 99 refrigerant detection unit 107 impeller 108 fan casing 108a air outlet opening part 108b suction opening part 111 casing 111a bottom surface portion 112 air inlet 112a opening lower end 113 air outlet 114a first front panel 114b second front panel 114c third front panel 115a lower space 115b upper space

**Claims**

1. A refrigeration cycle apparatus, comprising:

     a refrigerant circuit configured to circulate refrigerant having a flammability;
     an indoor unit including a casing configured to accommodate a load-side heat exchanger of the refrigerant circuit; and
     a controller configured to control the indoor unit,

   wherein the indoor unit includes a refrigerant detection unit and an air-sending fan,
   wherein the controller is configured to control the air-sending fan to operate at an airflow rate Q [m$^3$/h] when the refrigerant is detected, and
   wherein a lower flammability limit of the refrigerant is LFL [kg/m$^3$], and an assumed leaking speed of the refrigerant is W [kg/h], the airflow rate Q, the lower flammability limit LFL, and the assumed leaking speed W are set to satisfy a relationship of Q>W/LFL.

2. The refrigeration cycle apparatus of claim 1,
   wherein the casing has an air inlet, an air outlet, and an air passage formed between the air inlet and the air outlet, and
   wherein the load-side heat exchanger, the refrigerant detection unit, and the air-sending fan are arranged in the air passage, or a space inside the casing which communicates with the air passage.

3. The refrigeration cycle apparatus of claim 2, further comprising:

     a heat source unit configured to accommodate a heat source-side heat exchanger of the refrigerant circuit; and
     an extension pipe, which connects the indoor unit and the heat source unit to each other,

   wherein the extension pipe and the load-side heat exchanger are connected to each other through intermediation of a joint portion, and
   wherein the joint portion is arranged in the air passage, or the space inside the casing which communicates with the air passage.

4. The refrigeration cycle apparatus of claim 3, wherein the refrigerant detection unit is arranged below the load-side heat exchanger or the joint portion.

5. The refrigeration cycle apparatus of any one of claims 1 to 4,
   wherein R32 is used as the refrigerant, and
   the airflow rate Q satisfies a relationship of Q>32.7 [m$^3$/h].

6. The refrigeration cycle apparatus of any one of claims 1 to 5, wherein the indoor unit comprises an indoor unit of a floor type.

7. An airflow setting method of setting an airflow rate Q in a refrigeration cycle apparatus, the refrigeration cycle apparatus, comprising:

     a refrigerant circuit configured to circulate refrigerant having a flammability;
     an indoor unit including a casing configured to accommodate a load-side heat exchanger of the refrigerant circuit; and
     a controller configured to control the indoor unit,

wherein the indoor unit includes a refrigerant detection unit and an air-sending fan,

wherein the controller is configured to control the air-sending fan to operate at the airflow rate Q [m$^3$/h] when the refrigerant is detected, and

wherein, when a lower flammability limit of the refrigerant is LFL [kg/m$^3$] and an assumed leaking speed of the refrigerant is W [kg/h], the airflow rate Q is set so that the airflow rate Q, the lower flammability limit LFL, and the assumed leaking speed W satisfy a relationship of Q>W/LFL.

FIG. 1

FIG. 2

FIG. 3

# FIG. 4

FIG. 5

START

ACQUIRE REFRIGERANT CONCENTRATION — S1

IS REFRIG-ERANT CONCEN-TRATION EQUAL TO OR HIGHER THAN THRESHOLD VALUE? — S2

NO

YES

OPERATE INDOOR AIR-SENDING FAN AT AIRFLOW RATE Q (Q>W/LFL) — S3

END

## INTERNATIONAL SEARCH REPORT

| International application No. |
| --- |
| PCT/JP2016/063434 |

| A. CLASSIFICATION OF SUBJECT MATTER |
| --- |
| *F24F11/02*(2006.01)i, *F25B49/02*(2006.01)i |

According to International Patent Classification (IPC) or to both national classification and IPC

| B. FIELDS SEARCHED |
| --- |
| Minimum documentation searched (classification system followed by classification symbols)<br>F24F11/02, F25B49/02 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2016-29322 A (Mitsubishi Electric Corp.), 03 March 2016 (03.03.2016), paragraphs [0018] to [0019], [0031], [0060] to [0075], [0089]; fig. 9 to 16 (Family: none) | 1-7 |
| Y | WO 2012/049710 A1 (Mitsubishi Electric Corp.), 19 April 2012 (19.04.2012), paragraphs [0031] to [0040] & EP 2629026 A1 paragraphs [0031] to [0040] & CN 103154628 A | 1-7 |
| Y | JP 2014-142141 A (Mitsubishi Electric Corp.), 07 August 2014 (07.08.2014), paragraphs [0055], [0061] (Family: none) | 5-6 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 July 2016 (19.07.16) | 26 July 2016 (26.07.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2016/063434

C (Continuation). DOCUMENTS CONSIDERED TO BE RELEVANT

| Category* | Citation of document, with indication, where appropriate, of the relevant passages | Relevant to claim No. |
|---|---|---|
| E,A | JP 2016-70594 A (Fujitsu General Ltd.), 09 May 2016 (09.05.2016), paragraphs [0042] to [0057]; fig. 1 to 4 (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4599699 B

- JP 2016003783 A

**Non-patent literature cited in the description**

- Overview of the risk assessment and the safety guideline for VRF system using A2L refrigerants. The international Symposium on New Refrigerants and Environmental Technology 2014. The Japan Refrigeration and Air Conditioning Industry Association, November 2014, 234-240